# EUROPEAN PATENT APPLICATION

(11) **EP 2 661 051 A1**
(43) Date of publication of application: **06.11.2013**
(21) Application number: 12732288.1
(22) Date of filing: 04.01.2012
(51) Int. Cl.: H04L 29/08

(54) **METHOD AND DEVICE FOR PROCESSING SERVICE DATA STREAM**

(30) Priority: 04.01.2011 CN 201110000483
(71) Applicant: Huawei Technologies Co., Ltd., Shenzhen, Guangdong 518129 (CN)
(72) Inventor: GUO, Xuanyu, Shenzhen Guangdong 518129 (CN); CHEN, Yanyan, Shenzhen Guangdong 518129 (CN); YANG, Yinghong, Shenzhen Guangdong 518129 (CN); LI, Bingzhao, Shenzhen Guangdong 518129 (CN)
(74) Representative: Thun, Clemens
(86) International application number: PCT/CN2012/070024
(87) International publication number: WO 2012/092855

(57) **Abstract**

Disclosed are a method and a device for processing a service data stream. The method includes: a Media Access Control (MAC) layer transmitting data to a physical (PHY) layer; and the MAC layer notifying the PHY layer to process different data substreams by using different processing modes. The present invention is capable of saving network resources, increasing the number of access users and reducing the interference therebetween.

## Description

The present application claims the priority to Chinese Patent Application NO. 201110000483.1, filed with Chinese Patent Office on January 4, 2011, and entitled "A method and device for processing service data stream", which is incorporated herein by reference in its entirety.

### TECHNICAL FIELD

This invention relates to the field of mobile communications, and particularly, to a method and a device for processing service data streams.

### BACKGROUND

In order to improve the data transmission rate and meet different requirements, the wideband code division multiple access (WCDMA, Wideband Code Division Multiple Access) adopts the high speed packet access (HSPA, High Speed Packet Access) technology, including the high speed downlink packet access (HSDPA, High Speed Downlink Packet Access) technology and the high speed uplink packet access (HSUPA, High Speed Uplink Packet Access) technology, wherein the introduced HSDPA technology enables the downlink to achieve a rate up to 14.4 Mbits/s. In order to improve the WCDMA system performance, the HSDPA has been greatly enhanced on the radio interface, which is reflected as follows: the Physical (PHY) layer and the media access control (MAC , Media Access Control) layer mainly have shorter transmission time interval (TTI , Transmission Time Interval) and new high speed downlink shared channel (HS-DSCH , High Speed Downlink Shared Channel), 16QAM modulation is introduced, code division multiplexing and time division multiplexing are combined with each other, a new uplink control channel, the quick link adaptation is realized by using adaptive modulation and coding, hybrid automatic repeat request (HARQ, Hybrid Automatic Repeat Request) is employed, Node B-based fast scheduling, etc.

The HSDPA is an optimization and evolution carried out by the WCDMA downlink for the packet service. The HSUPA technology is introduced for the uplink to carry out an optimization and evolution for the packet service. Being similar to the HSDPA technology, the HSUPA adopts the HARQ, the Node B-based fast scheduling and 2 millisecond (ms) TTI short frame transmission. The HSUPA enables the maximum uplink data throughput of a single cell to reach 5.76 Mbits/s, which greatly improves the data traffic bearing capacity and the spectrum efficiency of the WCDMA uplink.

The circuit switching (CS, Circuit Switching) domain voice service of the WCDMA system can be borne in the dedicated channel (DCH, Dedicated Channel), which is referred to as CS over DCH. When the voice service uses the adaptive multi-rate (AMR, Adaptive Multi-Rate)/adaptive multi-rate wide-band (AMR-WB, Adaptive Multi-Rate Wide-Band) coding, each of the AMR voice frames includes three substreams A, B and C with their importance degrees decrease in turn. On the Uu interface, an individual radio bearer (RB, Radio Bearer) shall be created for each of the substreams based on the requirement of the AMR/AMR-WB codec. Each of the substreams is corresponding to an RB, and all the RBs are mapped to a logic channel referred to as dedicated traffic channel (DTCH, Dedicated Traffic Channel) through a radio link control (RLC, Radio Link Control) layer. Each of the DTCHs is then mapped to a transmission channel referred to as dedicated channel (DCH, Dedicated Channel) through an MAC layer. Finally, the PHY layer maps DCH data to the dedicated physical channel (DPCH, Dedicated Physical Channel).

The CS over HSPA characteristic and the CS voice service can be borne on the HSPA. In an existing CS over HSPA technology, the three substreams A, B and C of the AMR voice frame are merged into one PDCP protocol data unit (PDU, Protocol Data Unit) in the packet data convergence protocol (PDCP, Packet Data Convergence Protocol) layer, and then processed by the entities of radio link control (RLC, Radio Link Control) layer and media access control (MAC, Media Access Control) layer through a radio bearer (RB, Radio Bearer) to form an MAC-d PDU to be transferred to the PHY layer. The transmission blocks including the three substreams A, B and C are borne in the HSPA channel by the PHY layer for transmission. When it is found at the receiving end that the cyclic redundancy check (CRC, Cyclic Redundancy Check) sequence of the transmission block is erroneous, the receiving end feeds back a NACK message, and the transmitting end retransmits the whole transmission block including the AMR voice frame.

In the CS over HSPA technology, the existing mode for processing the substreams A, B and C wastes the network resources, and the network side does not allocate resources dynamically and effectively, while mutual interferences between the user equipments (UEs, User Equipments) are also increased.

### SUMMARY

Embodiments of the present invention provide a method and a device for processing service data stream, to save network resources and reduce interferences.

An aspect of the present invention provides a method for processing service data stream, comprising: transmitting, by an MAC layer, data to a PHY layer; and notifying, by the MAC layer, the PHY layer to process different data substreams by using different processing modes.

Another aspect of the present invention provides a method for processing service data stream, comprising: encapsulating, by a PDCP layer, data substreams into a PDCP PDU; and transmitting, by the PDCP layer, the PDCP PDU to an RLC layer through an RB, so as to transmit data to a PHY layer through the RLC layer and an MAC layer, respectively, and enable the MAC layer to notify the PHY layer to process different data substreams by using different processing modes.

Another aspect of the present invention provides a method for processing service data stream, comprising: receiving data transmitted from an MAC layer; receiving processing modes transmitted from the MAC layer for processing data substreams; and processing different data substreams by using different processing modes according to the processing modes.

Another aspect of the present invention provides a device for processing service data stream, comprising: a transmitting module configured to transmit data to a PHY layer; and a notifying module configured to notify the PHY layer to process different data substreams by using different processing modes.

Another aspect of the present invention provides a device for processing service data stream, comprising: an encapsulating module configured to encapsulate data substreams into a PDCP PDU; and a transmitting module configured to transmit the PDCP PDU to an RLC layer through an RB, so as to transmit data to the PHY layer through the RLC layer and the MAC layer, respectively, wherein, the MAC layer is enabled to notify the PHY layer to process the different data substreams by using different processing modes.

Another aspect of the present invention provides a device for processing service data stream, comprising: a receiving module configured to receive processing modes transmitted from the MAC layer for processing data substreams; and a processing module configured to process different data substreams by using different processing modes according to the processing modes.

As can be seen from the above embodiments of the present invention, the present invention can save network resources, increase the number of access users and reduce the interference therebetween.

### BRIEF DESCRIPTION OF DRAWINGS

In order to more clearly describe the technical solutions of the embodiments of the present invention, the drawings to be used in the descriptions of the prior art or the embodiments are briefly introduced as follows. Obviously, the following drawings just illustrate some embodiments of the present invention, and a person skilled in the art can obtain other drawings from these drawings without paying any creative effort.
Fig. 1 is a flow diagram of a method for processing service data stream provided by an embodiment of the present invention;
Fig. 2 is a flow diagram of a method for processing service data stream provided by another embodiment of the present invention;
Fig. 3 is a flow diagram of a method for processing service data stream provided by another embodiment of the present invention;
Fig. 4 is a flow diagram of a method for processing service data stream provided by another embodiment of the present invention;
Fig. 5 is a logic structure diagram of a device for processing service data stream provided by another embodiment of the present invention;
Fig. 6 is a logic structure diagram of a device for processing service data stream provided by another embodiment of the present invention;
Fig. 7 is a logic structure diagram of a device for processing service data stream provided by another embodiment of the present invention;
Fig. 8 is a logic structure diagram of a device for processing service data stream provided by another embodiment of the present invention;
Fig. 9 is a logic structure diagram of a device for processing service data stream provided by another embodiment of the present invention;
Fig. 10 is a logic structure diagram of a device for processing service data stream provided by another embodiment of the present invention;
Fig. 11 is a logic structure diagram of a device for processing service data stream provided by another embodiment of the present invention;
Fig. 12 is a logic structure diagram of a device for processing service data stream provided by another embodiment of the present invention; and
Fig. 13 is a logic structure diagram of a device for processing service data stream provided by another embodiment of the present invention.

### DESCRIPTION OF EMBODIMENTS

The technical solutions of the embodiments of the present invention will be clearly and completely described as follows with reference to the drawings. Obviously, those described herein are just parts of the embodiments of the present invention rather than all the embodiments. Based on the embodiments of the present invention, any other embodiment obtained by a person skilled in the art without paying any creative effort shall fall within the protection scope of the present invention.

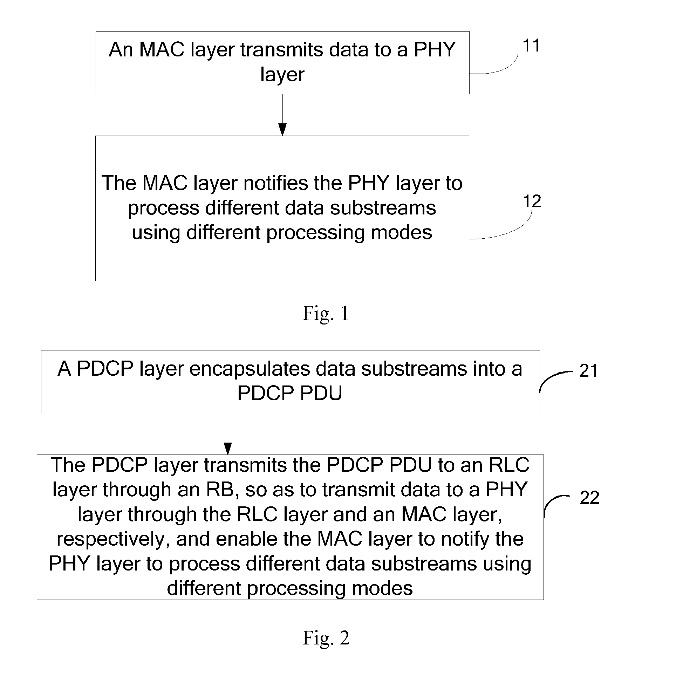

As illustrated in Fig. 1, an embodiment of the present invention provides a method for processing service data stream, which is described in the following.
11: A media access control (MAC) layer transmits data to a physical (PHY) layer.
12: The MAC layer notifies the PHY layer to process different data substreams by using different processing modes.

In another embodiment of the present invention, the PDCP protocol data unit (PDU) may carry a processing mode for the PHY layer to process data substreams in the current PDCP PDU.

In another embodiment of the present invention, the method further includes: the MAC layer receives all the processing modes notified by a radio resource control (RRC) layer.

In another embodiment of the present invention, the processing modes includes at least two processing modes corresponding to the data substreams of different importance grades respectively, wherein the data substream of the highest grade is processed by using a transmission mode having the highest quality of service (QoS) requirement, and the data substreams of other grades are processed by using the processing modes having the secondarily highest or successively degraded QoS requirements.

In another embodiment of the present invention, processing the data substreams of different importance grades by using different processing modes specifically includes:
segmenting the data substreams into at least two parts according to the importance grades, encapsulating the data substreams of different parts into different PDCP PDUs respectively, and transmitting by using different radio bearers (RBs), wherein data substream of the highest grade is processed by using a transmission mode having the highest QoS requirement, and data substreams of other grades are processed by using the processing modes having the secondarily highest or successively degraded QoS requirements.

In another embodiment of the present invention, the MAC layer notifies the PHY layer to process different data substreams by using different processing modes specifically include: encapsulating all the data substreams into the single PDCP PDU, and transmitting by using the single RB, wherein data substream of the highest grade is processed by using a transmission mode having the highest QoS requirement, and data substreams of other grades are processed by using the processing modes having the secondarily highest or successively degraded QoS requirements.

In another embodiment of the present invention, processing the data substreams of other grades by using the processing modes having the secondarily highest or successively degraded QoS requirements specifically includes: for a transmission block including the data substreams with their grades lower than the highest grade, by using a processing mode which does not need to add cyclic redundancy check (CRC) sequence and/or does not need retransmission when the transmission is erroneous, or in which corresponding retransmission number is lower than that of the data substream of the highest grade.

In another embodiment of the present invention, the data substreams are substream A, substream B and substream C of the adaptive multi-rate (AMR) voice frame.

In another embodiment of the present invention, the method further includes: notifying the PHY layer that a transmission block including the substream A needs to add a CRC sequence and/or retransmission is needed when the substream A is erroneously transmitted, and a transmission block including the substream B and/or the substream C does not need to add a CRC sequence and/or a retransmission is not required when the substreams B and C are erroneously transmitted.

In another embodiment of the present invention, the method further includes: notifying the PHY layer that the retransmission number of a transmission block including the substream B and/or the substream C when the transmission is erroneous is lower than that of a transmission block including the substream A; or the retransmission rate of the transmission block including the substream B and/or the substream C retransmitted when the transmission is erroneous is lower than that of the retransmitted transmission block including the substream A.

In another embodiment of the present invention, the method further includes: notifying the PHY layer to extract the substream A, and that a transmission block including the substream A needs to add a CRC sequence and/or retransmission is needed when the substream A is erroneously transmitted.

In another embodiment of the present invention, the method further includes: setting first and second logic channels corresponding to first and second RBs in the same priority, and configuring an interval between the scheduling of the substream A and the scheduling of the substreams B and C to be not more than an inter-frame interval of the AMR voice frames.

In another embodiment of the present invention, the method further includes: when a radio link control (RLC) PDU is segmented into MAC PDUs and transmitted to the PHY layer, indicating whether the MAC PDUs include the substream A data through an interlayer primitive of the MAC layer and the PHY layer.

As illustrated in Fig. 2, another embodiment of the present invention provides a method for processing service data stream, which is described in the following.
21: a PDCP layer encapsulates data substreams into a PDCP PDU.
22: the PDCP layer transmits the PDCP PDU to an RLC layer through an RB, so as to transmit data to a PHY layer through the RLC layer and an MAC layer, respectively, and enable the MAC layer to notify the PHY layer to process different data substreams by using different processing modes.

In another embodiment of the present invention, the data substreams are substream A, substream B and substream C of the AMR voice frame.

In another embodiment of the present invention, the PDCP layer encapsulates the substream A into a first PDCP PDU, and encapsulates the substreams B and C into a second PDCP PDU; transmits the first PDCP PDU and the second PDCP PDU to the RLC layer through a first RB and a second RB, respectively; the RLC layer adds RLC heads to the first PDCP PDU and the second PDCP PDU so as to form RLC PDUs and then transmits the RLC PDUs to the MAC layer.

In another embodiment of the present invention, the PDCP layer encapsulates the substreams A, B and C into the single PDCP PDU, and transmits the PDCP PDU to the RLC layer through the single RB; the RLC layer adds a RLC head to the PDCP PDU so as to form the RLC PDU and then transmits the RLC PDU to the MAC layer.

In another embodiment of the present invention, the MAC layer sets first and second logic channels corresponding to the first and second RBs in the same priority, and configures an interval between the scheduling of the substream A and the scheduling of the substreams B and C to be not more than an inter-frame interval of the AMR voice frames.

In another embodiment of the present invention, the processing modes for the PHY layer to process the data substreams in the current PDCP PDU include: a transmission block including the substream A needs to add a CRC sequence and/or retransmission is needed when the substream A is erroneously transmitted, and a transmission block including the substream B and/or the substream C does not need to add a CRC sequence and/or a retransmission is not required when the substream B and/or the substream C are erroneously transmitted.

In another embodiment of the present invention, the processing modes for the PHY layer to process the data substreams in the current PDCP PDU include: a retransmission number of a transmission block including the substream B and/or the substream C when the transmission is erroneous is lower than that of a transmission block including the substream A; or a retransmission rate of the transmission block including the substream B and/or the substream C retransmitted when the transmission is erroneous is lower than that of the retransmitted transmission block including the substream A.

In another embodiment of the present invention, the MAC layer does not multiplex the transmission block corresponding to the substream B and/or the substream C with other data stream, and during the uplink transmission, it transmits the substreams B and C in an unscheduled manner.

In another embodiment of the present invention, the MAC layer notifies the PHY layer to extract the substream A, wherein the processing modes for the PHY layer to process the data substreams in the current PDCP PDU include: a transmission block including the substream A needs to add a CRC sequence and/or retransmission is needed when the substream A is erroneously transmitted.

In another embodiment of the present invention, the PDCP layer indicates the RLC layer and the MAC layer not to segment an AMR voice packet including the substreams A, B and C; or the PDCP layer indicates the RLC layer and the MAC layer to segment the AMR voice packet including the substreams A, B and C.

In another embodiment of the present invention, when the PDCP layer indicates the RLC layer and the MAC layer to segment the AMR voice packet including the substreams A, B and C, the method further includes: when the MAC layer segments the RLC PDU into MAC PDUs and transmits the MAC PDUs to the PHY layer, indicating whether the MAC PDUs include the substream A data through an interlayer primitive of the MAC layer and the PHY layer.

In another embodiment of the present invention, during the uplink transmission, the method further includes: the PDCP layer indicates the MAC layer to transmit the substreams A, B and C in an unscheduled manner.

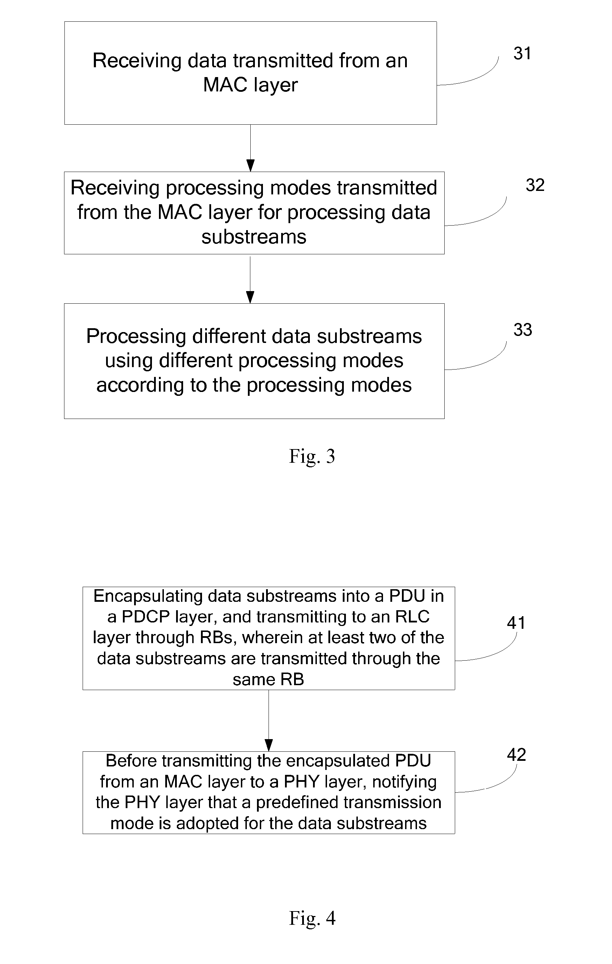

As illustrated in Fig. 3, another embodiment of the present invention provides a method for processing service data stream, which is described in the following.
31: receiving data transmitted from an MAC layer;
32: receiving processing modes transmitted from the MAC layer for processing data substreams;
33: processing different data substreams by using different processing modes according to the processing modes.

In another embodiment of the present invention, the processing modes includes at least two processing modes corresponding to the data substreams of different importance grades respectively, wherein the data substream of the highest grade is processed by using a transmission mode having the highest QoS requirement, and the data substreams of other grades are processed by using the processing modes having the secondarily highest or successively degraded QoS requirements.

In another embodiment of the present invention, processing the data substreams of other grades by using the processing modes having the secondarily highest or successively degraded QoS requirements specifically includes: for a transmission block including the data substreams with their grades lower than the highest grade, by using a processing mode which does not need to add a CRC sequence and/or a retransmission is not required when the transmission is erroneous, or in which corresponding retransmission number is lower than that of the data substream of the highest grade.

In another embodiment of the present invention, the data substreams are substream A, substream B and substream C of the AMR voice frame.

In another embodiment of the present invention, the data substreams in the current PDCP PDU are processed according to the processing modes, wherein processing the data substreams of different importance grades by using different processing modes specifically includes: adding a CRC sequence to a transmission block including the substream A and/or retransmitting the substream A when the substream A is erroneously transmitted, and not adding a CRC sequence to a transmission block including the substream B and/or the substream C and/or not retransmitting the substreams B and C when the substreams B and C are erroneously transmitted.

In another embodiment of the present invention, the data substreams in the current PDCP PDU are processed according to the processing modes, wherein processing the data substreams of different importance grades by using different processing modes specifically includes: processing by using a retransmission number of a transmission block including the substream B and/or the substream C when the transmission is erroneous be lower than that of a transmission block including the substream A; or processing by using a retransmission rate of the transmission block including the substream B and/or the substream C retransmitted when the transmission is erroneous be lower than that of the retransmitted transmission block including the substream A.

In another embodiment of the present invention, the substreams A, B and C are encapsulated into the single PDCP PDU.

In another embodiment of the present invention, the data substreams in the current PDCP PDU are processed according to the processing modes, wherein processing the data substreams of different importance grades by using different processing modes specifically includes: extracting the substream A, and adding a CRC sequence to a transmission block including the substream A and/or retransmitting the substream A when the substream A is erroneously transmitted.

In another embodiment of the present invention, extracting the substream A includes: extracting the substream A according to higher layer protocol head information and transmission format carried in the primitive of the RRC layer.

Referring to Fig. 4, which is a flow diagram of a method for processing service data stream provided by an embodiment of the present invention. The method may include the steps of:
41: encapsulating data substreams into a PDU in a PDCP layer, and transmitting to an RLC layer through RBs, wherein at least two of the data substreams are transmitted through the single RB.

The packet data convergence protocol (PDCP, Packet Data Convergence Protocol) layer and the radio link control (RLC, Radio Link Control) layer are two protocol sublayers of the user panel (UP, User Panel), wherein the PDCP layer is the upper layer, the RLC layer is the lower layer. After the data substreams are received from an encoder, they are necessarily encapsulated in each of the protocol layers, and transmitted to the PHY layer from top to bottom layer-by-layer. In the embodiment of the present invention, the data substreams may be those having different importance and quality of service (QoS, Quality Of Service) requirements in the same frame of data.

In the embodiment provided by the present invention, the data substreams are encapsulated into a Protocol Data Unit (PDU, Protocol Data Unit) in the PDCP layer and then transmitted to the RLC layer. At least two (e.g., two or three) of the data substreams are transmitted by using the single RB. For example, the data substreams having the same importance and QoS requirement may be encapsulated into a PDCP PDU and then transmitted by using the single RB.
42: an RRC layer notifies a PHY layer that a predefined transmission mode is adopted for the data substreams; and transmits the PDCP PDU from the MAC layer to the PHY layer.

In the embodiment of the present invention, after the PDCP PDU arrives at the MAC layer, the MAC layer encapsulates the PDCP PDU to obtain an MAC PDU. Before the MAC PDU is transmitted from the MAC layer to the PHY layer, a Radio Resource Control (RRC, Radio Resource Control) layer of a control panel (CP, Control Panel) notifies, through a primitive, the PHY layer that a predefined transmission mode is adopted for those data streams. For example, some data substreams do not need to be retransmitted even they are erroneously transmitted, a transmission block including certain data substreams does not need the CRC, or the maximum retransmission number of a transmission block including certain data substreams is lower than that of a transmission block including some other data substreams, etc.

As can be seen from the above embodiment of the present invention, one RB is used by at least two data substreams rather than a single data substream, and before a PDU into which those data substreams are encapsulated is transmitted from the MAC layer to the PHY layer, the PHY layer is notified that a predefined transmission mode is used for those data substreams. Thus on one hand, the present invention occupies less logic channels, which increases the number of the access users and reduces the interference therebetween. On the other hand, the PHY layer can use different transmission modes for the data substreams in one frame of data, for example, some transmission blocks not having a high QoS requirement may not be retransmitted, which saves not only the processing resources at the receiving end, but also the network transmission resources, such as power and code resources.

Next, the method for processing service data streams according to the present invention will be described by taking substreams A, B and C of an AMR voice frame in the CS over HSPA as examples. Although the present invention is described by taking the substreams A, B and C of the AMR voice frame as examples, a person skilled in the art will appreciate that the method provided by the present invention is also applicable to other data substreams, and the examples given herein shall not be deemed as the limitations to the present invention.

As mentioned above, the substreams A, B and C of the AMR voice frame represent different information importance, different error tolerances, and different QoS guarantees for respective substreams during voice coding, wherein the substream A is the most important, the substream B is the secondarily important, and the substream C is the least important, and the substream A requires higher accuracy in air interface transmission. The flows of a method provided by an embodiment of the present invention in which a UP protocol sublayer encapsulates data streams according to configuration parameters of a CP are described as follows.

S201: a PDCP layer of a transmitting end (RNC or UE) indicates whether to use an enhanced CS over HSPA according to an RRC of a CP, and encapsulates substreams A, B and C into two PDUs.

In this embodiment, the PDCP layer encapsulates the substream A into a PDCP PDU, and encapsulates substreams B and C into another PDCP PDU, according to a data merging indication in an RRC primitive CPDCP-CONFIG-Req. The two PDCP PDUs arrive at the PHY layer through the RLC layer and the MAC layer by using different RBs respectively. In order to facilitate the following description while keeping generality, the substream A may be encapsulated into a first PDCP PDU, the substreams B and C may be encapsulated into a second PDCP PDU, and then transmitted to the RLC layer, respectively, wherein the first and second PDCP PDUs are transmitted through first and second RBs, respectively.

S202: the RLC layer configures corresponding RLC mode for the RBs according to an RRC signaling, e.g., configuring an RLC unacknowledge mode (UM, Unacknowledge Mode) for the first and second RBs which transmit the AMR voice, and determine whether to segment or cascade the PDCP PDUs according to an indication in the RRC primitive. If the RRC primitive indicates not to segment or cascade, an UM entity in the RLC layer at the transmitting end adds an RLC head to the two PDCP PDUs, respectively, to form RLC PDUs, and transmits the RLC PDUs to the MAC layer. For example, the UM entity directly adds an 8-bit RLC head to the two PDCP PDUs and encapsulates them into first and second RLC PDUs, wherein the RLC head includes an RLC layer serial number (SN, Serial Number). Next, the first and second RLC PDUs are transmitted to the MAC layer.
5203: the MAC layer determines not to retransmit the transmission block including the substreams B and C, according to an indication "No retransmission" in the RB information elements corresponding to the substreams B and C in the RRC primitive CMAC-CONFIG-Req.

Meanwhile, according to the indication in the RRC primitive, the MAC layer segments or cascades the first and second RLC PDUs, i.e., encapsulating the first RLC PDU and the second RLC PDU into a first MAC-d PDU and a second MAC-d PDU, respectively, and transmitting to an MAC-hs or MAC-es entity, which performs a cascade operation on the PDUs according to the indication in the RRC primitive.

For the uplink, a scheduling mode may be adopted at the UE side, i.e., the MAC layer segments or cascades the first and second RLC PDUs according to the indication in the RRC primitive. For example, when the signal is weak, the MAC layer may be indicated to segment an AMR voice packet including the substreams A, B and C, and then transmit to the PHY layer. The minimum segmentation size of PDU shall be set, e.g., the minimum segmentation block is limited to 124 bits to ensure that the substream A in one AMR voice frame will not be segmented into two parts, and an indication to the PHY layer is carried in the primitive PHY-Data-IND between the MAC layer and the PHY layer, so as to indicate that the TTI data includes the substream A and needs to be retransmitted. The RRC primitive may also be used to indicate the MAC layer to transmit the substreams A, B and C in an unscheduled manner, i.e., to be configured in an unscheduled mode. At this time, the MAC layer at the UE side does not segment the substreams A, B and C.

For the downlink, a radio network controller (RNC, Radio Network Controller) transmits an indication "enhanced CS over HSPA Indicator" to the NodeB through an Iub interface signaling, so as to indicate to carry an indication "No retransmission" which represents that the queue does not need to be retransmitted by the PHY layer, when a special MAC-hs queue "Priority Queue ID" is assigned to the service; indicate to transmit data corresponding to the substream A and other services in cascade, in order to improve air interface transmission efficiency, and ensure that the PHY layer separates a transmission block including the substreams B and C from other data streams; and indicate the MAC layer not to multiplex the transmission block including the substreams B and C with other data streams.

Since the substreams A, B and C belong to the same AMR voice frame, and the substream A is borne in one RB while the substreams B and C are borne in another RB, even the receiving end subsequently receives the substreams B and C, merges them into an AMR voice frame and submits it to a voice decoder, the voice decoder still cannot decode the AMR voice frame if the data of the substream A is firstly scheduled while the data of the substreams B and C are scheduled too late. In order that the voice decoder at the receiving end can correctly decode an AMR voice frame, the first logic channel corresponding to the first RB bearing the substream A and the second logic channel corresponding to the second RB bearing the substreams B and C may be set in the same priority. When the substreams A, B and C arrive at the MAC layer, the data in the MAC queues of the first and second logic channels (i.e., the data of the substreams A, B and C) is scheduled simultaneously in the MAC layer. Further, an interval between the scheduling of the substream A and the scheduling of the substreams B and C may be configured as being not more than a certain interval, e.g., an inter-frame interval of the AMR voice frames, i.e., 20 ms. Specifically, an indication of maximum interval between the scheduling of the substream A and the scheduling of the substreams B and C, i.e., "maximal scheduled intervals of the two RB" may be notified to the MAC layer through the RRC primitive. After receiving the data of the first and second logic channels at the same time, the MAC layer schedules the data in the two scheduling queues of the same priority according to the indication of maximum interval "maximal scheduled intervals of the two RB" configured by the higher layer RRC, so as to ensure that the scheduling intervals of the two transmission blocks can be timely merged at the receiving end.

S204: the MAC layer completes an encapsulation of the PDU from the MAC layer, transmits to the PHY layer, and notifies, through a primitive, the PHY layer to perform different retransmissions for different data substreams.

Before the substreams A, B and C are transmitted from the MAC layer to the PHY layer, an indication is carried to the PHY layer through a primitive PHY-Data-IND between the MAC layer and the PHY layer, so as to notify the PHY layer that in the TTI data, a transmission block including the substream A needs to add a CRC sequence and/or retransmission is needed when the substream A is erroneously transmitted, and a transmission block including the substream B and the substream C does not need to add a CRC sequence and/or a retransmission is not required when the substreams B and C are erroneously transmitted. For example, available predefined transmission modes may be notified to the PHY layer through an RRC layer of the CP, and the PHY layer has corresponding predefined transmission mode according to the indication notified by the MAC layer and carried in the primitive PHY-Data-IND. For example, transmission mode 1 may be used to process the substreams B and C, wherein transmission mode 1 may be represented with two or more bits, e.g., 00 represents that a retransmission is not required. Herein, the RRC layer maps the indication "no retransmission" in RRC signaling into a predefined transmission mode (e.g., transmission mode 1) which can be parsed by the PHY layer.

The flows of a method provided by another embodiment of the present invention in which a UP protocol sublayer encapsulates data streams according to configuration parameters of a CP are described as follows, including:
S301: a PDCP layer of a transmitting end (RNC or UE) indicates whether to use an enhanced CS over HSPA according to an RRC of a CP, and encapsulates substreams A, B and C into two PDUs.

In the embodiment of the present invention, the PDCP layer encapsulates the substream A into a PDU, and encapsulates substreams B and C into another PDU, according to a data merging indication in an RRC primitive CPDCP-CONFIG-Req. The two PDUs arrive at the PHY layer through the RLC layer and the MAC layer by using different RBs respectively. In order to facilitate the following description while keeping generality, the substream A may be encapsulated into a first PDCP PDU, the substreams B and C may be encapsulated into a second PDCP PDU, and then transmitted to the RLC layer, respectively, wherein the first and second PDCP PDUs are transmitted through first and second RBs, respectively.
S302: the RLC layer uses corresponding RLC mode for the RBs according to the RRC signaling configuration, e.g., by using an RLC UM for the first and second RBs which transmit the AMR voice, and determine whether to segment or cascade the PDCP PDUs according to an indication in the RRC primitive. If the RRC primitive indicates not to segment or cascade, an UM entity in an RLC layer at the transmitting end directly adds an RLC head of 8 bits or 16 bits to the two PDCP PDUs, respectively, and encapsulate them into first and second RLC PDUs, wherein the RLC head includes an RLC layer Serial Number (SN, Serial Number). Next, the UM entity transmits the first and second RLC PDUs to the MAC layer.
5303: the MAC layer determines to retransmit the transmission block including the substreams B and C in a predetermined frequency, according to an indication "retransmission number of substreams B and C" in the RB information elements corresponding to the substreams B and C in the RRC primitive CMAC-CONFIG-Req.

Meanwhile, according to the indication in the RRC primitive, the MAC layer segments or cascades the first and second RLC PDUs, i.e., encapsulating the first RLC PDU and the second RLC PDU into a first MAC-d PDU and a second MAC-d PDU, respectively, and transmitting to an MAC-hs/ehs or MAC-e/es entity, which performs a cascade operation on the PDUs according to the indication in the RRC primitive.

Although the substreams B and C have lower importance than the substream A, in order to ensure the voice quality, the substreams B and C shall be transmitted to the receiving end as possible, or the substreams B and C may be appropriately retransmitted when the network resources and the air interface resources are enough. That is, in the embodiment of the present invention, before a PDU including the substreams A, B and C is transmitted from the MAC layer to the PHY layer, the MAC layer determines to retransmit the transmission block including the substreams B and C in a predetermined frequency, according to an indication "retransmission number of substreams B and C" in the RB information elements corresponding to the substreams B and C in the RRC primitive CMAC-CONFIG-Req, or notifies the PHY layer of a retransmission rate of the transmission block including the substreams B and C retransmitted when the transmission is erroneous. For example, in order to prevent the block error ratio (BLER, Block Error Ratio) of the substreams B or substreams C respectively exceeding a predetermined threshold, a maximum retransmission number of the transmission block including the substreams B and C when the transmission is erroneous may be defined, or the PHY layer may be notified to dynamically adjust the retransmission frequencies of the substreams B and C according to the conditions (e.g., tight, idle, etc.) of the network resources and the air interface resources.
S304: the MAC layer completes an encapsulation of the PDU from the RLC layer, transmits to the PHY layer, and notifies, through a primitive, the PHY layer to perform different retransmissions for different data substreams.

Before the substreams A, B and C are transmitted from the MAC layer to the PHY layer, an indication is carried to the PHY layer through a primitive PHY-Data-IND between the MAC layer and the PHY layer, so as to notify the PHY layer of the maximum retransmission number of a transmission block including the current substreams B and C when the transmission is erroneous, or a retransmission rate when the retransmission is performed. The RRC layer notifies the PHY layer of the available predefined transmission modes, and the PHY layer uses corresponding predefined transmission mode according to the indication notified by the MAC layer and carried in the primitive PHY-Data-IND. For example, the MAC layer notifies, through the primitive, the PHY layer to process the substreams B and C by using transmission mode 2, wherein transmission mode 2 may be represented with two or more bits, e.g., 01 represents one time of retransmission, 10 represents two times of retransmissions, 11 represents three times of retransmissions, and so on. Herein, the MAC layer or the RRC layer maps the indication "maximum retransmission number" into a predefined transmission mode (e.g., transmission mode 2) which can be parsed by the PHY layer.

The flows of a method provided by another embodiment of the present invention in which a UP protocol sublayer encapsulates data streams according to configuration parameters of a CP are described as follows.
S401: a PDCP layer of a transmitting end (RNC or UE) encapsulates substreams A, B and C into one PDU according to whether an RRC primitive of a CP use an enhanced CS over HSPA.

When the substreams A, B and C are in an uplink transmission, the RNC performs an uplink Enhanced CS over HSPA configuration for the UE. For example, an indication "No Segment Indicator in RLC and MAC" is added to RADIO BEARER SETUP, so as to indicate the RLC layer and the MAC layer not to segment an AMR voice packet including the substreams A, B and C. Thus, the RRC layer of the UE notifies, through the RRC primitive, the PDCP layer, the RLC layer and the MAC layer respectively. In this embodiment, the PDCP layer encapsulates the substreams A, B and C into one PDCP PDU according to a data merging indication in an RRC primitive CPDCP-CONFIG-Req. The PDCP PDU arrives at the PHY layer through the RLC layer and the MAC layer by using the single RB.

Or, the RRC indicates, through the primitive, the RLC layer and the MAC layer to segment the AMR voice packet including the substreams A, B and C.

When the substreams A, B and C are in a downlink transmission, the Radio Network Controller (RNC, Radio Network Controller) performs a downlink Enhanced CS over HSPA configuration for the NodeB, e.g., notifying the NodeB to use the Enhanced CS over HSPA through an NBAP message.
S402: the RLC layer determines whether to segment or cascade the PDCP PDUs according to the RLC UM configured by the RRC signaling for the RB, and an indication in the RRC primitive.

According to the indication "No Segment Indicator in RLC and MAC" from the RRC layer, the RLC layer at the UE side does not segment the PDCP PDU. After being added with an RLC head, the PDCP PDU is transmitted to the MAC layer.
S403: the MAC layer performs a scheduled or unscheduled transmission of the MAC-d PDU according to a non-segmentation indication and an unscheduled data transmission indication, or an indication of minimum segmentation PDU size in the RRC primitive CMAC-CONFIG-Req.

For the uplink, a scheduling mode may be adopted, i.e., the MAC layer of the UE performs segmenting or cascading according to the indication in the RRC primitive. For example, when the signal is weak, the MAC layer may be indicated to segment an AMR voice packet including the substreams A, B and C, and then transmit to the PHY layer. When the MAC layer segments an RLC PDU including the substreams A, B and C into MAC PDUs and transmits to the PHY layer, it is indicated whether the MAC PDUs include the substream A through an interlayer primitive of the MAC layer and the PHY layer. Or, a minimum segmentation PDU size shall be set, e.g., the minimum segmentation block is limited to 124 bits to ensure that the substream A in one AMR voice frame will not be segmented into two parts, and an indication to the PHY layer is carried in the primitive PHY-Data-IND between the MAC layer and the PHY layer, so as to indicate whether the MAC PDUs include the substream A; if so, corresponding transmission block needs to add a CRC sequence and/or retransmission is needed when the substream A is erroneously transmitted. The RRC primitive may also be used to indicate the MAC layer to transmit the substreams A, B and C in an unscheduled manner, i.e., to be configured in an unscheduled mode. In that case, the MAC layer at the UE side does not segment the substreams A, B and C.

For the downlink, in order to improve the air interface transmission efficiency and ensure that the PHY layer separates a transmission block including the substreams B and C from other data streams, it is indicated to transmit data corresponding to the substream A and other services in cascade. In the embodiment of the present invention, as indicated by the primitive, the MAC layer does not multiplex the transmission block including the substreams B and C with other data streams.
S404: the MAC layer completes an encapsulation of the PDU from the RLC layer into the MAC PDU, transmits to the PHY layer, and notifies, through a primitive, the PHY layer to perform different retransmissions for different data substreams.

After the substreams A, B and C are transmitted from the MAC layer to the PHY layer, the PHY layer extracts the substream A according to the higher layer protocol head bit information and the transmission format carried in the primitive of the RRC layer. According to an indication carried by the primitive PHY-Data-IND from the MAC layer to the PHY layer for a transmission block including the substream A is included in the TTI data, after the substream A is extracted, it is added with a CRC sequence and is retransmitted when the substream A is erroneously transmitted, while a transmission block including the substreams B and C does not need to add the CRC sequence and/or a retransmission is not required when the substreams B and C are erroneously transmitted. The RRC layer notifies the PHY layer of the available predefined transmission modes, and the PHY layer uses corresponding predefined transmission mode according to the indication notified by the MAC layer and carried in the primitive PHY-Data-IND. For example, the MAC layer notifies, through the primitive, the PHY layer to process the substreams B and C by using transmission mode 2, wherein transmission mode 2 may be represented with two or more bits, e.g., 01 represents one time of retransmission, 10 represents two times of retransmissions, 11 represents three times of retransmissions, and so on. Herein, the MAC layer or the RRC layer maps the indication "maximum retransmission number" into a predefined transmission mode (e.g., transmission mode 2) which can be parsed by the PHY layer. Or transmission mode 1 may be used, and 00 represents that a retransmission is not required.

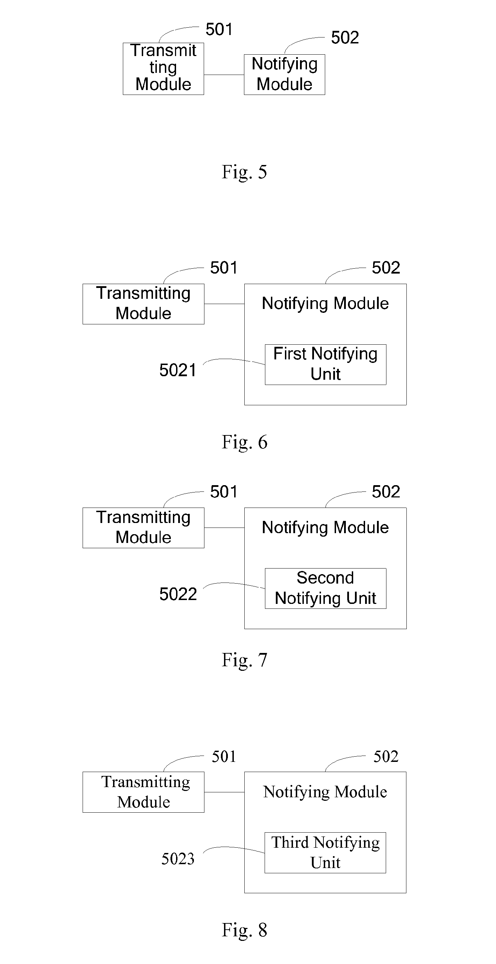

Fig. 5 illustrates a structure diagram of a device for processing service data stream provided by another embodiment of the present invention. The device is an device of MAC layer, and it may be a base station controller or a terminal, including a transmitting module 501 and a notifying module 502.

The transmitting module 501 is configured to transmit data to a PHY layer.

The notifying module 502 is configured to notify the PHY layer to process different data substreams by using different processing modes.

The processing modes includes at least two processing modes corresponding to the data substreams of different importance grades respectively, wherein the data substream of the highest grade is processed by using a transmission mode having the highest QoS requirement, and the data substreams of other grades are processed by using the processing modes having the secondarily highest or successively degraded QoS requirements.

The data substreams of different importance grades are processed by using different processing modes, specifically including: segmenting the data substreams into at least two parts according to the importance grades, encapsulating the data substreams of different parts into different PDCP PDUs respectively, and transmitting by using different RBs, wherein data substream of the highest grade is processed by using a transmission mode having the highest QoS requirement, and data substreams of other grades are processed by using the processing modes having the secondarily highest or successively degraded QoS requirements.

The data substreams of different importance grades are processed by using different processing modes, specifically including: encapsulating all the data substreams into the single PDCP PDU, and transmitting by using the single RB, wherein data substream of the highest grade is processed by using a transmission mode having the highest QoS requirement, and data substreams of other grades are processed by using the processing modes having the secondarily highest or successively degraded QoS requirements.

The data substreams of other grades are processed by using the processing modes having the secondarily highest or successively degraded QoS requirements, specifically including: for a transmission block including the data substreams with their grades lower than the highest grade, by using a processing mode which does not need to add a CRC sequence and/or a retransmission is not required when the transmission is erroneous, or in which corresponding retransmission number is lower than that of the data substream of the highest grade.

The data substreams are substream A, substream B and substream C of the AMR voice frame.

As illustrated in Fig. 6, the notifying module 502 is or further include a first notifying unit 5021 configured to notify the PHY layer that a transmission block including the substream A needs to add a CRC sequence and/or retransmission is needed when the substream A is erroneously transmitted, and a transmission block including the substream B and/or the substream C does not need to add a CRC sequence and/or a retransmission is not required when the substreams B and C are erroneously transmitted.

As illustrated in Fig. 7, the notifying module 502 is or further include a second notifying unit 5022 configured to notify the PHY layer that a retransmission number of a transmission block including the substream B and/or the substream C when the transmission is erroneous is lower than that of a transmission block including the substream A; or a retransmission rate of the transmission block including the substream B and/or the substream C retransmitted when the transmission is erroneous is lower than that of the retransmitted transmission block including the substream A.

As illustrated in Fig. 8, the notifying module 502 is or further include a third notifying unit 5023 configured to notify the PHY layer to extract the substream A, and that a transmission block including the substream A needs to add a CRC sequence and/or retransmission is needed when the substream A is erroneously transmitted.

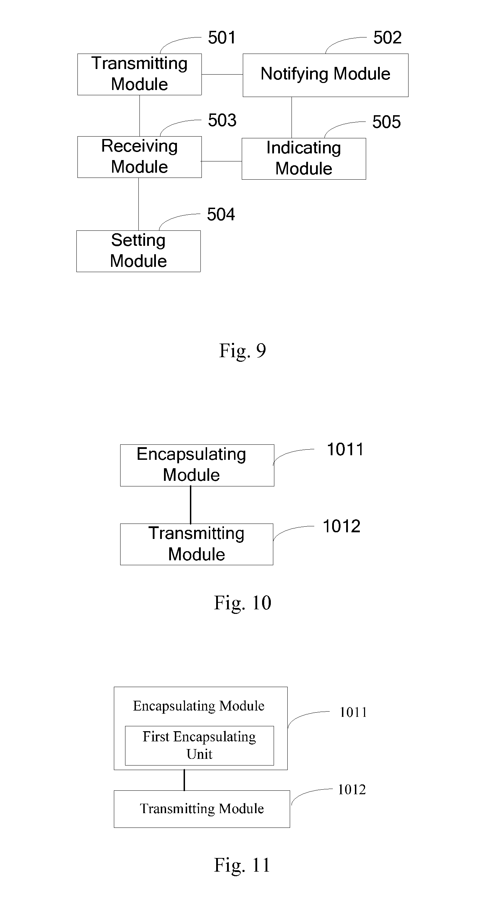

As illustrated in Fig. 9, the device further includes a receiving module 503 configured to receive data transmitted after an RLC PDU is formed by adding an RLC head at the RLC layer, wherein, when the substream A is encapsulated into a first PDCP PDU and the substreams B and C are encapsulated into a second PDCP PDU, the first and second PDCP PDUs are transmitted to the RLC layer through first and second RBs, respectively. Or, when the substreams A, B and C are encapsulated into the single PDCP PDU, the PDCP PDU is transmitted to the RLC layer through the single RB.

As illustrated in Fig. 9, the device further includes a setting module 504 configured to set first and second logic channels corresponding to the first and second RBs in the same priority, and configure an interval between the scheduling of the substream A and the scheduling of the substreams B and C to be not more than an inter-frame interval of the AMR voice frames.

As illustrated in Fig. 9, the device further includes an indicating module 505 configured to indicate, when the RLC PDU is segmented into MAC PDUs and transmitted to the PHY layer, whether the MAC PDUs include the substream A through an interlayer primitive of the MAC layer and the PHY layer.

Fig. 10 illustrates a device for processing service data stream provided by another embodiment of the present invention. The device is a device in a PDCP layer, and it may be a base station controller or a terminal, including an encapsulating module 1011 and a transmitting module 1012.

The encapsulating module 1011 is configured to encapsulate data substreams into a PDCP PDU.

The transmitting module 1012 is configured to transmit the PDCP PDU to an RLC layer through an RB, so as to transmit data to the PHY layer through the RLC layer and the MAC layer, respectively, wherein, the MAC layer is enabled to notify the PHY layer to process the different data substreams by using different processing modes.

The data substreams are substream A, substream B and substream C of the AMR voice frame.

As illustrated in Fig. 11, the encapsulating module 1011 is or include a first encapsulating unit configured to encapsulate the substream A into a first PDCP PDU, and encapsulate the substreams B and C into a second PDCP PDU in the PDCP layer.

The transmitting module 1012 is further configured to transmit the first and second PDCP PDUs to the RLC layer through the first and second RBs, respectively, so as to transmit to the MAC layer an RLC PDU formed by adding an RLC head to the RLC layer.

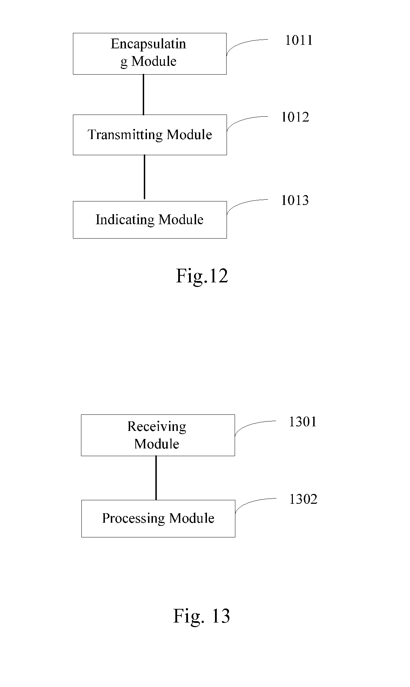

As illustrated in Fig. 12, the device further includes a first indicating module 1013 configured to indicate the MAC layer not to multiplex the substreams B and C with other data streams, and to transmit the substreams B and C in an unscheduled manner in the uplink transmission.

The encapsulating module is or include a second encapsulating unit configured to encapsulate the substreams A, B and C into the same PDU in the PDCP layer, and transmit to the RLC layer through the same logic channel.

The device further includes a second indicating module configured to indicate the RLC layer and the MAC layer not to segment the AMR voice packet including the substreams A, B and C; or a third indicating module configured to indicate the RLC layer and MAC layer to segment the AMR voice packet including the substreams A, B and C.

During uplink transmission, the device further includes a fifth indicating module configured to indicate the MAC layer to transmit the substreams A, B and C in an unscheduled manner.

Fig. 13 illustrates a device for processing service data stream provided by another embodiment of the present invention. The device is located in the PHY layer, and it may be a base station controller or a terminal, including a receiving module 1301 and a processing module 1302.

The receiving module 1301 is configured to receive processing modes for processing data substreams transmitted from an MAC layer.

The processing module 1302 is configured to process different data substreams by using different processing modes according to the processing modes.

The processing modes includes at least two processing modes corresponding to the data substreams of different importance grades respectively, wherein the data substream of the highest grade is processed by using a transmission mode having the highest QoS requirement, and the data substreams of other grades are processed by using the processing modes having the secondarily highest or successively degraded QoS requirements.

Processing the data substreams of other grades by using the processing modes having the secondarily highest or successively degraded QoS requirements specifically includes: for a transmission block including the data substreams with their grades lower than the highest grade, by using a processing mode which does not need to add a CRC sequence and/or a retransmission is not required when the transmission is erroneous, or in which corresponding retransmission number is lower than that of the data substream of the highest grade.

The data substreams are substream A, substream B and substream C of the AMR voice frame.

The device further includes a first processing unit configured to add a CRC sequence to a transmission block including the substream A and/or retransmit when the substream A is erroneously transmitted, and not add a CRC sequence to a transmission block including the substream B and/or the substream C and/or not retransmit when the substreams B and C are erroneously transmitted.

The device further includes a second processing unit configured to process by using a retransmission number of a transmission block including the substream B and/or the substream C when the transmission is erroneous be lower than that of a transmission block including the substream A; or process by using a retransmission rate of the transmission block including the substream B and/or the substream C retransmitted when the transmission is erroneous be lower than that of the retransmitted transmission block including the substream A.

The device further includes a third processing unit configured to extract the substream A when the substreams A, B and C are encapsulated into the single PDCP PDU, and add a CRC sequence to a transmission block including the substream A and/or retransmit when the substream A is erroneously transmitted.

The third processing unit further includes a substream extracting module configured to extract the substream A according to higher layer protocol head information and transmission format carried in the primitive of the RRC layer.

To be noted, in the above descriptions of the embodiments of the device that provided to the PHY layer for distinguishing service data stream, the divisions of the functional modules are just examples. In actual applications, the above functions may be completed by different functional modules upon demand, e.g., according to corresponding hardware configuration requirements or for the convenience of software implementation, i.e., the internal structure of the device provided to the PHY layer for distinguishing service data stream may be divided into different functional modules to complete all or parts of the above functions. Moreover, in actual applications, the corresponding functional module may be implemented by corresponding hardware or by performing corresponding software with corresponding hardware. For example, the above encapsulating module may be hardware such as an encapsulator for encapsulating the data substreams into a PDU in the PDCP layer and transmitting to the RLC layer through logic channels, or a general processor or other hardware device capable of performing corresponding computer programs to complete the above functions. For another example, the above setting module may be hardware such as a setter for setting the first and second logic channels in the same priority and configuring an interval between the scheduling of the substream A and the scheduling of the substreams B and C to be not more than an inter-frame interval of the AMR voice frames, or a general processor or other hardware device capable of performing corresponding computer programs to complete the above functions.

In addition, the information interaction and execution processes of the modules/units of the device are based on the same conception as the method embodiments, so the produced technical effects are the same as those achieved by the method embodiments. Please refer to the descriptions of the method embodiments for the details, and herein are not repeated.

In the embodiments provided by the present application, it shall be appreciated that the disclosed system, device and method may be implemented in other ways. For example, the above device embodiments are just exemplary. For example, the unit division is just a logical function division, and other division mode may be used in the implementation, e.g., multiple units or assemblies may be combined or integrated into another system, or some features may be omitted or not executed. Another point is that the displayed or discussed mutual coupling, or direct coupling or communication connection may be implemented through indirect coupling or communication connection between some interfaces, devices or units in electrical, mechanical or other forms.

The units described as separate parts may be or may not be physically separated, and the parts displayed as units may be or may not be physical units, i.e., they may be located at the same place or distributed to multiple network elements. The object of the solution of the embodiment may be achieved by selecting parts or all of the units upon actual demand.

In addition, various functional units in the embodiments of the present invention may be integrated into one processing unit, or existed as individual physical units, or more than two units may be integrated into one unit. The above integrated units may be implemented in the form of hadware and in the form of software function units.

When the integrated units are implemented in the form of software function units and sold or used as individual products, they may be stored in a computer readable access medium. Based on such understanding, the technical solutions of the present invention substantively, or a part thereof making a contribution to the prior art, may be reflected in the form of software product stored in a storage medium, including several instructions to enable a computer device (e.g., personal computer, server, network facility, etc.) to execute all or parts of the steps of the methods of respective embodiments of the present invention. The storage medium includes various mediums capable of storing program codes, such as U-disk, mobile hard disk, read-only memory (ROM, Read-Only Memory), random access memory (RAM, Random Access Memory), magnetic disc, optical disc, etc.

The above descriptions are just specific embodiments of the present invention, and the protection scope of the present invention is not limited thereto. Any change or substitution that can be easily conceived by a person skilled in the art within the technical scope disclosed by the present invention shall be covered by the protection scope of the present invention. Therefore, the protection scope of the present invention shall be determined by the protection scope of the claims.

## Claims

1. A method for processing service data stream, **characterized in** comprising:
transmitting, by a media access control (MAC) layer, data to a physical (PHY) layer; and
notifying, by the MAC layer, the PHY layer to process different data substreams by using different processing modes respectively.

2. The method according to claim 1, **characterized in that** the processing modes comprises at least two processing modes corresponding to data substreams of different importance grades respectively, wherein a data substream of the highest grade is processed by using a transmission mode having the highest quality of service requirement, and data substreams of other grades are processed by using the processing modes having the secondarily highest or successively degraded quality of service requirements.

3. The method according to claim 1, **characterized in that** the processing the different data substreams by using the different processing modes specifically comprises:
when the data substreams are segmented into at least two parts according to the importance grades, and data substreams of different parts are encapsulated into different packet data convergence protocol (PDCP) protocol data units (PDUs) respectively, transmitting the different PDCP PDU by using different radio bearers (RBs) respectively; or, when the data substreams are all encapsulated into a single PDCP PDU, transmitting the single PDCP PDU by using a single RB;
processing the data substream of the highest grade by using a transmission mode having the highest quality of service requirement; and
processing the data substreams of other grades by using the processing modes having the secondarily highest or successively degraded quality of service requirements.

4. The method according to claim 2 or 3, **characterized in that** the processing the data substreams of other grades by using the processing modes having the secondarily highest or successively degraded quality of service requirements specifically comprises:
for a transmission block comprising data substreams with their grades lower than the highest grade, by using a processing mode which does not need to add a cyclic redundancy check (CRC) sequence and/or when the transmission is erroneous, a retransmission is not required or a retransmission is required in which corresponding retransmission number is lower than that of the data substream of the highest grade.

5. The method according to claim 1, **characterized in that** the data substreams comprises substream A, substream B and substream C of an Adaptive Multi-Rate (AMR) voice frame.

6. The method according to claim 5, **characterized in** further comprising:
notifying the PHY layer that a transmission block comprising the substream A needs to add a CRC sequence and/or is needed to retransmit when the substream A is erroneously transmitted, and a transmission block comprising at least one of the substream B and the substream C does not need to add a CRC sequence and/or is not needed to retransmit when the substreams B and C are erroneously transmitted.

7. The method according to claim 5, **characterized in** further comprising:
notifying the PHY layer that a retransmission number of a transmission block comprising at least one of the substream B and the substream C is lower than that of a transmission block comprising the substream A when the transmission is erroneous; or a retransmission rate of the transmission block comprising at least one of the substream B and the substream C retransmitted is lower than that of the retransmitted transmission block comprising the substream A when the transmission is erroneous.

8. The method according to claim 5, **characterized in** further comprising:
when the substreams A, B and C are encapsulated into the single PDCP PDU and transmitted to a radio link control (RLC) layer through the single RB; the RLC layer adds a RLC head to the PDCP PDU to form a RLC PDU and then transmitted to the MAC layer, notifying, by the MAC layer, the PHY layer to extract the substream A, and that a transmission block comprising the substream A needs to add a CRC sequence and/or retransmission is needed when the substream A is erroneously transmitted.

9. The method according to claim 5, **characterized in** further comprising:
when the substream A is encapsulated into a first PDCP PDU, and the substreams B and C are encapsulated into a second PDCP PDU; the first and second PDCP PDUs are transmitted to the RLC layer through first and second RBs, respectively; the RLC layer adds RLC heads to the first and second PDCP PDUs to form RLC PDUs and then transmitted to the MAC layer, setting, by the MAC layer, first and second logic channels corresponding to the first and second RBs in the same priority, and configuring an interval between the scheduling of the substream A and the scheduling of the substreams B and C to be not more than an inter-frame interval of the AMR voice frames.

10. The method according to claim 5, **characterized in** further comprising:
when the RLC PDU is segmented into MAC PDUs and transmitted to the PHY layer, indicating whether the MAC PDUs comprise the substream A data through an interlayer primitive of the MAC layer and the PHY layer.

11. The method according to claim 5, **characterized in** further comprising:
when the substream A is encapsulated into a first PDCP PDU, and the substreams B and C are encapsulated into a second PDCP PDU; the first and second PDCP PDUs are transmitted to the RLC layer through first and second RBs, respectively; the RLC layer adds RLC heads to the first and second PDCP PDUs to form RLC PDUs and then transmitted to the MAC layer, not multiplexing, by the MAC layer, a transmission block corresponding to the substream B and/or the substream C with other data stream, while transmitting the substreams B and C in an unscheduled manner in the uplink transmission.

12. A method for processing service data stream, **characterized in** comprising:
encapsulating, by a PDCP layer, data substreams into a PDCP PDU; and
transmitting, by the PDCP layer, the PDCP PDU to an RLC layer through an RB, so as to transmit data to a PHY layer through the RLC layer and an MAC layer, respectively, and enable the MAC layer to notify the PHY layer to process different data substreams by using different processing modes.

13. The method according to claim 12, **characterized in that** the data substreams comprises substream A, substream B and substream C of an AMR voice frame.

14. The method according to claim 13, **characterized in** further comprising:
encapsulating, by the PDCP layer, the substream A into a first PDCP PDU, and the substreams B and C into a second PDCP PDU;
transmitting the first and second PDCP PDUs to the RLC layer through first and second RBs, respectively; and
transmitting to the MAC layer an RLC PDU formed by adding RLC heads to the first and second PDCP PDUs at RLC layer.

15. The method according to claim 13, **characterized in** further comprising:
encapsulating, by the PDCP layer, the substreams A, B and C into the single PDCP PDU, and transmitting to the RLC layer through the single RB; and
transmitting to the MAC layer an RLC PDU formed by adding an RLC head to the PDCP PDU at RLC layer.

16. The method according to any of claims 13 to 15, **characterized in that** the processing, by the PHY layer, the different data substreams by using the different processing modes specifically comprises:
a transmission block comprising the substream A needs to add a CRC sequence and/or retransmission is needed when the substream A is erroneously transmitted, and a transmission block comprising the substream B and/or the substream C does not need to add a CRC sequence and/or a retransmission is not required when the substream B and/or the substream C are erroneously transmitted.

17. The method according to any of claims 13 to 15, **characterized in that** the processing, by the PHY layer, the different data substreams by using the different processing modes specifically comprises:
a retransmission number of a transmission block comprising the substream B and/or the substream C when the transmission is erroneous is lower than that of a transmission block comprising the substream A; or
a retransmission rate of the transmission block comprising the substream B and/or the substream C retransmitted when the transmission is erroneous is lower than that of the retransmitted transmission block comprising the substream A.

18. The method according to claim 15, **characterized in** further comprising:
notifying the PHY layer to extract the substream A;
wherein, the PHY layer processes the data substreams in the current PDCP PDU by using a processing mode in which a transmission block comprising the substream A needs to add a CRC sequence and/or retransmission is needed when the substream A is erroneously transmitted.

19. The method according to any of claims 13 to 15, **characterized in** further comprising:
indicating the RLC layer and the MAC layer not to segment an AMR voice packet comprising the substreams A, B and C; or
indicating the RLC layer and the MAC layer to segment an AMR voice packet comprising the substreams A, B and C.

20. The method according to claim 19, **characterized in that** if indicating the RLC layer and the MAC layer to segment the AMR voice packet comprising the substreams A, B and C, the method further comprises:
when the MAC layer segments the RLC PDU into MAC PDUs and transmits to the PHY layer, indicating whether the MAC PDUs comprise the substream A data through an interlayer primitive of the MAC layer and the PHY layer.

21. The method according to claim 15, **characterized in that** in the uplink transmission, the method further comprises:
indicating the MAC layer to transmit the substreams A, B and C in an unscheduled manner.

22. A method for processing service data stream, **characterized in** comprising:
receiving data transmitted from a media access control (MAC) layer;
receiving processing modes transmitted from the media access control (MAC) layer for processing data substreams; and
processing different data substreams by using different processing modes according to the processing modes.

23. The method according to claim 22, **characterized in** further comprising:
receiving all processing modes notified by a radio resource control (RRC) layer.

24. The method according to claim 22, **characterized in that** the processing modes comprises at least two processing modes corresponding to the data substreams of different importance grades respectively, wherein the data substream of the highest grade is processed by using a transmission mode having the highest quality of service requirement, and the data substreams of other grades are processed by using the processing modes having the secondarily highest or successively degraded quality of service requirements.

25. The method according to claim 24, **characterized in that** the processing the data substreams of other grades by using the processing modes having the secondarily highest or successively degraded quality of service requirements specifically comprises:
for a transmission block comprising data substreams with their grades lower than the highest grade, by using a processing mode which does not need to add a cyclic redundancy check (CRC) sequence and/or when the transmission is erroneous a retransmission is not required or a retransmission is required in which corresponding retransmission number is lower than that of the data substream of the highest grade.

26. The method according to claim 22, **characterized in that** the data substreams comprises substream A, substream B and substream C of an Adaptive Multi-Rate (AMR) voice frame.

27. The method according to claim 26, **characterized in that** the processing the different data substreams by using the different processing modes according to the processing modes specifically comprises:
adding a cyclic redundancy check (CRC) sequence to a transmission block comprising at least one of the substream A and retransmitting when the substream A is erroneously transmitted, and not adding a cyclic redundancy check (CRC) sequence to a transmission block comprising at least one of the substream B and the substream C and/or not retransmitting when the substreams B and C are erroneously transmitted.

28. The method according to claim 26, **characterized in that** the processing the different data substreams by using the different processing modes according to the processing modes specifically comprises:
processing by using a retransmission number of a transmission block comprising at least one of the substream B and the substream C which is lower than that of a transmission block comprising the substream A when the transmission is erroneous; or processing by usinga retransmission rate of the transmission block comprising the at least one of the substream B and the substream C retransmitted which is lower than that of the retransmitted transmission block comprising the substream A when the transmission is erroneous.

29. The method according to claim 26, **characterized in that** the substreams A, B and C are encapsulated into a single packet data convergence protocol (PDCP) protocol data unit (PDU).

30. The method according to claim 29, **characterized in that** the processing the different data substreams by using the different processing modes according to the processing modes specifically comprises:
extracting the substream A, and
adding a cyclic redundancy check (CRC) sequence to a transmission block comprising the substream A and/or retransmitting when the substream A is erroneously transmitted.

31. The method according to claim 30, **characterized in that** the extracting the substream A comprises:
extracting the substream A according to higher layer protocol head information and transmission format carried in a primitive of a radio resource control (RRC) layer.

32. A device for processing service data stream, **characterized in** comprising:
a transmitting module configured to transmit data to a physical (PHY) layer; and
a notifying module configured to notify the PHY layer to process different data substreams by using different processing modes.

33. The device according to claim 32, **characterized in that** the processing modes comprises at least two processing modes corresponding to the data substreams of different importance grades respectively, wherein the data substream of the highest grade is processed by using a transmission mode having the highest quality of service requirement, and the data substreams of other grades are processed by using the processing modes having the secondarily highest or successively degraded quality of service requirements.

34. The device according to claim 32, **characterized in that** the different data substreams are processed by using the different processing modes specifically comprises:
the data substreams are segmented into at least two parts according to the importance grades, the data substreams of different parts are encapsulated into different PDCP PDUs respectively, and the different PDCP PDUs are transmitted by using different RBs, wherein data substream of the highest grade is processed by using a transmission mode having the highest quality of service requirement, and data substreams of other grades are processed by using the processing modes having the secondarily highest or successively degraded quality of service requirements.

35. The device according to claim 32, **characterized in that** the different data substreams are processed by using the different processing modes specifically comprises:
all the data substreams are encapsulated into the single PDCP PDU, and the single PDCP PDU is transmitted by using the single RB, wherein data substream of the highest grade is processed by using a transmission mode having the highest quality of service requirement, and data substreams of other grades are processed by using the processing modes having the secondarily highest or successively degraded quality of service requirements.

36. The device according to claim 33, 34 or 35, **characterized in that** the data substreams of other grades are processed by using the processing modes having the secondarily highest or successively degraded quality of service requirements specifically comprises:
a processing mode is used for a transmission block comprising the data substreams with their grades lower than the highest grade, wherein in the processing mode, a cyclic redundancy check (CRC) sequence is not required to add and/or when the transmission is erroneous, a retransmission is not required or a retransmission having the retransmission number is lower than that of the data substream of the highest grade is required.

37. The device according to claim 32, **characterized in that** the data substreams comprises substream A, substream B and substream C of an Adaptive Multi-Rate (AMR) voice frame.

38. The device according to claim 37, **characterized in that** the notifying module comprises:
a first notifying unit configured to notify the PHY layer that a transmission block comprising the substream A needs to add a cyclic redundancy check (CRC) sequence and/or retransmission is needed when the substream A is erroneously transmitted, and a transmission block comprising at least one of the substream B and the substream C does not need to add a cyclic redundancy check (CRC) sequence and/or a retransmission is not required when the substreams B and C are erroneously transmitted.

39. The device according to claim 37, **characterized in that** the notifying module further comprises:
a second notifying unit configured to notify the PHY layer that a retransmission number of a transmission block comprising at least one of the substream B and the substream C is lower than that of a transmission block comprising the substream A when the transmission is erroneous; or a retransmission rate of the transmission block comprising at least one of the substream B and the substream C retransmitted is lower than that of the retransmitted transmission block comprising the substream A when the transmission is erroneous.

40. The device according to claim 37, **characterized in** further comprising:
a receiving module configured to receive data transmitted after a radio link control (RLC) protocol data unit (PDU) is formed by adding an RLC head at the RLC layer;
wherein, the substream A is encapsulated into a first packet data convergence protocol (PDCP) protocol data unit (PDU), and the substreams B and C are encapsulated into a second PDCP PDU; the first and second PDCP PDUs are transmitted to the RLC layer through first and second RBs, respectively.

41. The device according to claim 40, **characterized in** further comprising:
a setting module configured to set first and second logic channels corresponding to the first and second RBs in the same priority, and configure an interval between the scheduling of the substream A and the scheduling of the substreams B and C to be not more than an inter-frame interval of the AMR voice frames.

42. The device according to claim 37, **characterized in** further comprising:
a receiving module configured to receive data transmitted after a radio link control (RLC) protocol data unit (PDU) is formed by adding an RLC head at the RLC layer;
wherein, the substreams A, B and C are encapsulated into the single PDCP PDU and transmitted to the RLC layer through the single RB.

43. The device according to claim 42, **characterized in that** the notifying module further comprises:
a third notifying unit configured to notify the PHY layer to extract the substream A, and that a transmission block comprising the substream A needs to add a cyclic redundancy check (CRC) sequence and/or retransmission is needed when the substream A is erroneously transmitted.

44. The device according to any one of claims 37 to 43, **characterized in** further comprising:
an indicating module configured to indicate, when the RLC PDU is segmented into MAC PDUs and transmitted to the PHY layer, whether the MAC PDUs comprise the substream A data through an interlayer primitive of the MAC layer and the PHY layer.

45. A device for processing service data stream, **characterized in** comprising:
an encapsulating module configured to encapsulate data substreams into a PDCP PDU; and
a transmitting module configured to transmit the PDCP PDU to an RLC layer through an RB, so as to transmit data to the PHY layer through the RLC layer and the MAC layer, respectively, wherein, the MAC layer is enabled to notify the PHY layer to process the different data substreams by using different processing modes.

46. The device according to claim 45, **characterized in that** the data substreams comprises substream A, substream B and substream C of an AMR voice frame.

47. The device according to claim 46, **characterized in that** the encapsulating module comprises:
a first encapsulating unit configured to encapsulate the substream A into a first PDCP PDU, and the substreams B and C into a second PDCP PDU in the PDCP layer;
the transmitting module is specifically configured to transmit the first and second PDCP PDUs to the RLC layer through first and second RBs, respectively, so as to transmit to the MAC layer an RLC PDU formed by adding an RLC head at the RLC layer.

48. The device according to claim 46, **characterized in** further comprising:
a first indicating module configured to indicate the MAC layer not to multiplex the substreams B and C with other data streams, and to transmit the substreams B and C in an unscheduled manner in the uplink transmission.

49. The device according to claim 46, **characterized in that** the encapsulating module comprises:
a second encapsulating unit configured to encapsulate the substreams A, B and C into the same PDU, and transmit to the RLC layer through the same logic channel.

50. The device according to claim 46, **characterized in** further comprising:
a second indicating module configured to indicate the RLC layer and the MAC layer not to segment an AMR voice packet comprising the substreams A, B and C; or
a third indicating module configured to indicate the RLC layer and MAC layer to segment the AMR voice packet comprising the substreams A, B and C.

51. The device according to claim 49, **characterized in that** in the uplink transmission, the device further comprises:
a fifth indicating module configured to indicate the MAC layer to transmit the substreams A, B and C in an unscheduled manner.

52. A device for processing service data stream, **characterized in** comprising:
a receiving module configured to receive processing modes transmitted from an MAC layer for processing data substreams; and
a processing module configured to process different data substreams by using different processing modes according to the processing modes.

53. The device according to claim 52, **characterized in that** the processing modes comprises at least two processing modes corresponding to the data substreams of different importance grades respectively, wherein the data substream of the highest grade is processed by using a transmission mode having the highest quality of service requirement, and the data substreams of other grades are processed by using the processing modes having the secondarily highest or successively degraded quality of service requirements.

54. The device according to claim 53, **characterized in that** processing the data substreams of other grades by using the processing modes having the secondarily highest or successively degraded quality of service requirements specifically comprises:
for a transmission block comprising the data substreams with their grades lower than the highest grade, by using a processing mode which does not need to add a cyclic redundancy check (CRC) sequence and/or when the transmission is erroneous, a retransmission is not required or a retransmission corresponding retransmission number is lower than that of the data substream of the highest grade is required.

55. The device according to claim 52, **characterized in that** the data substreams comprises substream A, substream B and substream C of an Adaptive Multi-Rate (AMR) voice frame.

56. The device according to claim 55, **characterized in** further comprising:
a first processing unit configured to add a cyclic redundancy check (CRC) sequence to a transmission block comprising the substream A and/or retransmit when the substream A is erroneously transmitted, and not add a cyclic redundancy check (CRC) sequence to a transmission block comprising at least one of the substream B and the substream C and/or not retransmit when the substreams B and C are erroneously transmitted.

57. The device according to claim 55, **characterized in** further comprising:
a second processing unit configured to process by using a retransmission number of a transmission block comprising at least one of the substream B and the substream C which is lower than that of a transmission block comprising the substream A when the transmission is erroneous; or process by using a retransmission rate of the transmission block comprising at least one of the substream B and the substream C which is lower than a retransmitted transmission block comprising the substream A when the transmission is erroneous.

58. The device according to claim 55, **characterized in** further comprising:
a third processing unit configured to extract the substream A when the substreams A, B and C are encapsulated into a single packet data convergence protocol (PDCP) protocol data unit (PDU), and add a cyclic redundancy check (CRC) sequence to a transmission block comprising the substream A and/or retransmit when the substream A is erroneously transmitted.

59. The device according to claim 58, **characterized in that** the third processing unit further comprises:
a substream extracting module configured to extract the substream A according to higher layer protocol head information and transmission format carried in a primitive of a radio resource control (RRC) layer.
